# EUROPEAN PATENT APPLICATION

(11) **EP 0 774 609 A1**
(43) Date of publication of application: **21.05.1997**
(21) Application number: 96203083.9
(22) Date of filing: 05.11.1996
(51) Int. Cl.: F16L 3/10

(54) **Shock-resistant pipework system**

(30) Priority: 16.11.1995 NL 1001669
(71) Applicant: Koninklijke Schelde Groep B.V., NL-4381 SE Vlissingen (NL)
(72) Inventor: Ludolphij, Johannes Wilhelmus Lubbertus, 4380 AL Vlissingen (NL)
(74) Representative: de Bruijn, Leendert C.

(57) **Abstract**

A shock-resistant pipework system comprises one or more fibre-reinforced plastic pipe sections (1,5a,5b) which are connected at at least two points, by means of fixing elements, to a fixed element (foundation). At least one of said fixing elements consists of a metal bracket (2a) made up of two ring halves (6,7) which are provided with flanges (8) and are fixed to one another at the location of the flanges (8), two metal legs (10,11) being fixed to that ring half (7) which is on the side of the fixed element (3), the gap between said metal legs (10,11) essentially corresponding to the diameter of the pipe section. The legs (10,11) are, in turn, fixed to a metal transition section (13) permanently connected to the fixed element (3) (foundation). The pipework system is supported in a statically determined way, in that another fixing element (2b) holds the pipe section in place in both the axial and the radial direction, whilst the abovementioned bracket (2a) holds the pipe section in place in a radial direction only.

## Description

The invention relates to a pipework system comprising: at least one fibre-reinforced plastic pipe section which is connected at at least two points, by means of fixing elements, to a fixed element (foundation).

The ability of pipework systems in (war)ships to withstand shocks caused by underwater explosions has already been a topic of concern, consideration and research for many years. However, there are also pipework systems installed on land which under certain circumstances, for example in areas subject to earthquakes or in areas where industrial processing plants susceptible to explosions are located, have to be able to withstand severe shocks.

Up to now fibre-reinforced plastic pipes have not been considered for use in pipework systems which have to be able to withstand severe shocks and pressure waves, specifically because severe shocks lead to micro-cracks or substantial leaks and to delamination of the plastic pipes. Even thick steel pipes, despite their elasticity, are not able to withstand very severe shocks.

The aim of the invention is to provide a pipework system consisting of lightweight, non-corrosive, maintenance-free, relatively inexpensive pipe sections made of fibre-reinforced plastic, which system, as a result of the special mounting and fixing, surprisingly is able to absorb very severe shocks without cracks and leakages occurring and without the pipes delaminating.

According to the invention, the pipework system mentioned in the preamble is, to this end, characterised in that at least one of the fixing elements consists of a metal bracket made up of two ring halves which are provided with flanges and are fixed to one another at the location of the flanges, wherein two metal legs are fixed to that ring half which is located on the side of said fixed element, the distance between said metal legs essentially corresponding to the diameter of the pipe section, which legs are fixed to a metal transition section permanently connected to the fixed element (foundation), and in that the pipework system is supported in a statically determined way in that one of the fixing elements holds the pipe section in its place in both the axial and the radial direction, whilst the said bracket (or the other brackets) holds the pipe section in its place in a radial direction only.

The pipes which have been mounted using the special plastically deformable brackets and other fixing elements are interrupted at suitable locations and at the interruptions are provided with expansion/compensation sections permitting axial shift. The important feature is that a substantial proportion of the shock energy is absorbed by the plastic deformation of the brackets and that instantaneous changes in volume as a consequence of shock waves in the liquid or the gas in the pipe sections are compensated for by local changes in length at the location of the compensation/expansion sections. Furthermore, the laminate of the fibre-reinforced pipe sections is found to be undamaged on deformation of the brackets. It is surprising that the brackets do not break when subjected to severe shocks but absorb the shock energy by means of plastic deformation, said brackets, which are made of metal, as it were sacrificing themselves on deformation as a result of severe shock in order to prevent damage to the pipe sections.

The two legs of each bracket can form part of a U-shaped section, the body of which is welded to the transition section. It is not precluded that the legs are directly connected to the transition section or form a whole with said section.

The fixing element which determines both the axial and the radial position of a pipe section can consist of one ring which is provided on either side with contact elements fixed to the pipe section. However, it is more practical to construct the fixing element which determines the axial and the radial position of a pipe section from two rings, each consisting of two ring halves, which rings are held some distance apart, at least one saddle, which serves as axial stop capping, being fixed to the pipe section between the two rings.

The metal transition section of the brackets which determine only the radial position of a pipe section consists of a plate which is able to bend in the longitudinal direction of the pipe section.

In contrast, the metal transition section of the fixing element which determines the axial and the radial position preferably consists of an inflexible structural component such as a tube or H-section.

Suitable compensation/expansion sections are, inter alia, bellows-shaped elements and clamping bushes.

To prevent rattling, it is useful to coat the inner surface of the bracket halves with a layer of rubber.

The invention will now be explained in more detail with reference to the figures.

Figure 1 shows a cross-section through a pipe section, belonging to a pipework system according to the invention, at the location where said pipe section is supported by a single bracket in the radial direction.

Figure 2 shows a side view of an end section of a first pipe section which at one end is connected to a second pipe section and is fixed by means of a single bracket.

Figure 3 shows a side view of the other end section of the first pipe section which is connected to a third pipe section and is fixed by means of a double bracket.

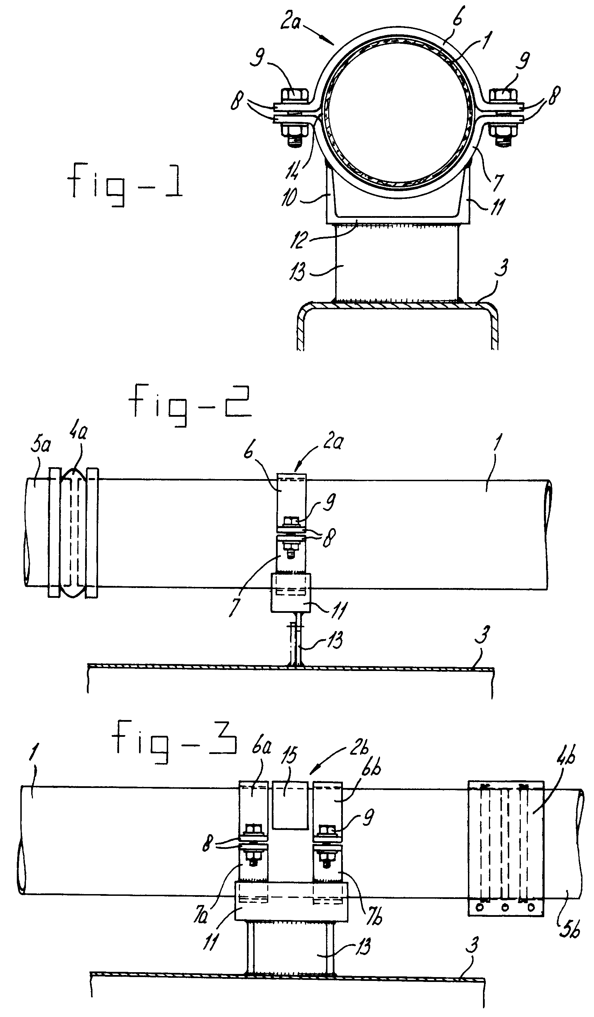

In the first two Figures 1 and 2, two pipe sections 1 and 5a are shown, where a single metal bracket 2a is used for fixing one end of the pipe section 1, which bracket is fixed to a foundation element 3 (or at least a fixed element). The pipe section 1 is connected via a compensation/expansion section in the form of a bellows element 4a to a pipe section 5, some gap being left free between the ends of the pipe sections 1 and 5a facing one another.

The bracket 2a comprises two ring halves 6 and 7, each provided with flanges 8 at their ends. The flanges of the upper ring half 6 are connected by means of bolts 9 to the flanges of the lower ring half 7. The legs 10 and 11 of a U-section are welded to the lower ring half 7, the body 12 of said U-section being welded, in turn, to a transition section in the form of a flexible plate 13, which is welded to the foundation element 3.

The brackets are made of metal (steel, aluminium) and can deform elastically and plastically. Preferably, the inner surface of the ring halves is coated with a layer of rubber 14.

The single bracket 2a according to Figure 2 acts in the radial direction only and does not impart any axial direction to the pipe section 1. In contrast, the double bracket 2b according to Figure 3 acts in both the radial and the axial direction. Said double bracket has four ring halves 6a, 7a and 6b, 7b, each with two flanges 8, two pairs of bolts 9 providing the connection. The legs 10 and 11 form a spacer between the ring halves 7a, 7b. The transition section 13 has a cross-section in the shape of an H, or is of another inflexible construction (for example a tube). Instead of the double bracket 2b, it is also possible to use another fixing element, for example a flanged connector, in order to connect a pipe section to the foundation.

At least one saddle 15 is glued to the pipe section 1 between the rings 6a, 7a and 6b, 7b, which saddle 15 ensures that the pipe 1 is not able to "slip" through the bracket 2b in the event of severe shocks.

In Figure 3, the compensation/expansion section between the pipe sections 1 and 5a is in the form of a clamping bush 4b, preferably with rubber rings between bush and pipe sections.

A pipe section is understood to be a pipe or assembly of pipes which extends between two expansion/compensation elements 4a and/or 4b.

One fixing element which acts in the radial and the axial directions (Fig. 3) and one or more brackets which act in the radial direction only (Fig. 2) are needed for mounting each pipe section. What is achieved by this means is that the system is statically determined.

Subjection of a pipework system to severe shocks leads to
- the ring halves 6, 7 undergoing plastic deformation such that the spaces enclosed by said halves become oval,
- the legs 11 undergoing plastic deformation such that their ends move towards one another.

The transition sections 13 have, in the main, a stabilising function, the plate-shaped embodiment according to Figure 2 being able elastically to follow the bending.

## Claims

1. Pipework system comprising: at least one fibre-reinforced plastic pipe section (1, 5a, 5b) which is connected at at least two points, by means of fixing elements, to a fixed element (foundation), characterised in that at least one of the fixing elements consists of a metal bracket (2a) made up of two ring halves (6, 7) which are provided with flanges (8) and are fixed to one another at the location of the flanges (8), wherein two metal legs (10, 11) are fixed to that ring half (7) which is located on the side of said fixed element (3), the distance between said metal legs (10, 11) essentially corresponding to the diameter of the pipe section, which legs (10, 11) are fixed to a metal transition section (13) permanently connected to the fixed element (3) (foundation), and in that the pipework system is supported in a statically determined way in that one of the fixing elements (2b) holds the pipe section in its place in both the axial and the radial direction, whilst the said bracket (2a) (or the other brackets (2a)) holds the pipe section in its place in a radial direction only.

2. Pipework system according to Claim 1, comprising various fibre-reinforced pipe sections, characterised in that the ends of successive pipe sections are some distance apart and are connected to one another by means of compensation/expansion sections (4) which permit a small axial movement of said ends with respect to one another.

3. Pipework system according to Claim 1 or 2, characterised in that the fixing element (2b) which determines both the axial and the radial position of a pipe section has two rings each consisting of two ring halves (6a, 7a; 6b, 7b), which rings are held some distance apart, at least one saddle (15) being fixed to the pipe section between the two rings, which saddle serves as an axial stop capping.

4. Pipework system according to one of the preceding claims, characterised in that the two legs (10, 11) of each bracket (2) form part of a U-shaped section.

5. Pipework system according to one of the preceding claims, characterised in that the metal transition section (13) of the bracket (2a) which determines the radial position only consists of a plate which is able to bend in the longitudinal direction of the pipe section.

6. Pipework system according to Claim 3, characterised in that the metal transition section (13) of the bracket (2b) which determines both the axial and the radial position consists of an inflexible structural component such as a tube or H-section.

7. Pipework system according to one of the preceding claims, characterised in that the compensation/expansion sections consist of a bellows section (4a).

8. Pipework system according to one of Claims 1 to 6, characterised in that the compensation/expansion sections consist of a clamping bush (4b).

9. Pipework system according to one of the preceding claims, characterised in that the inner surface of the ring halves (6 and 7) is coated with a layer of rubber (14).

10. Metal bracket for fixing pipe sections to a fixed element, characterised in that said bracket is made up of ring halves (6, 7) which are provided with flanges (8) and are fixed to one another at the location of the flanges (8), wherein two metal legs are fixed to one of said ring halves, which metal legs, in turn, are connected to a metal transition section (13) consisting of a flexible plate.

11. Metal fixing element for fixing pipe sections to a fixed component (foundation), which element comprises two brackets, each consisting of two ring halves with flanges which are fixed to one another by means of bolts and two elongated strips 10, 11 which are connected to the brackets and hold these apart, wherein the gap between the strips (10, 11) essentially corresponds to the inside diameter of the brackets, a transition section (13) consisting of a flexible plate being fixed to the two strips (10, 11).
